# EUROPEAN PATENT SPECIFICATION

(11) **EP 3 787 104 B1**
(45) Date of publication and mention of the grant of the patent: **02.04.2025**
(21) Application number: 19194711.8
(22) Date of filing: 30.08.2019
(51) Int. Cl.: H01P 3/10, H01P 5/12, H04B 3/32

(54) **SURFACE WAVE SPLITTER AND NETWORK ARCHITECTURE**
OBERFLÄCHENWELLENVERTEILER UND NETZWERKARCHITEKTUR
SÉPARATEUR D'ONDES DE SURFACE ET ARCHITECTURE DE RÉSEAU

(43) Date of publication of application: 03.03.2021
(73) Proprietor: Swisscom AG, 3050 Bern (CH)
(72) Inventor: ZASOWSKI, Thomas, 8053 Zürich (CH); STRAUMANN, Reto, 1715 Alterswil (CH); JAMALY, Nima, 3008 Bern (CH); LAMPARTER, Oliver, 8006 Zürich (CH); SCHUHMACHER, Adrian, 3510 Konolfingen (CH); REITMANN, Marcel, 2555 Brügg (CH); SCHWENDENER, Rico, 8305 Dietlikon (CH)
(74) Representative: Mathys & Squire

(56) References cited:
- KR-B1- 101 400 128
- US-A1- 2006 067 622
- US-A1- 2012 148 052
- US-A1- 2018 139 610
- US-A1- 2018 192 509
- REZEM MAHER ET AL: "Low-Cost Fabrication of All-Polymer Components for Integrated Photonics", JOURNAL OF LIGHTWAVE TECHNOLOGY, IEEE, USA, vol. 35, no. 2, 15 January 2017 (2017-01-15), pages 299 - 308, XP011641234, ISSN: 0733-8724, [retrieved on 20170213], DOI: 10.1109/JLT.2016.2639740

## Description

### Field of the invention

The present invention relates to a signal splitter adapted to surface wave communication, particularly surface wave communication using surface waves of a wavelength in the order of 1mm and a network architecture incorporating such splitters.

### Description of related art

As described for example in US patent no. 8897697, a guided surface wave can be a wave in the millimeter band that propagates along a conductor, for example a wire. The wire acts as a type of waveguide that functions by slowing the propagation velocity of electromagnetic waves below the free-space velocity, causing the wavefronts to slightly bend inwards towards the wire, which keeps the waves entrained in the wire. Bends of large radii are tolerated, but too sharp a bend in the wire will cause the line to radiate and lose some of the wave energy into space. Guided surface-waves can propagate down both insulated and bare metal wires or cables, including twisted pairs of wires.

A communication system based on surface waves in the range of tens to hundreds of Gigahertz (GHz), e.g. 30 GHz to 300 GHz, is attractive because it allows to reuse a significant amount of existing network infrastructure, i.e. the electric power distribution network or the existingtelephone or building cabling structure. Nonetheless, such a communication system also requires new components such as surface wave launchers, surface wave amplifiers, surface wave repeaters, surface wave splitters, etc. Examples of such components are referred to in the above cited US patent and related literature. US2006/067622A1 relates to an optical branch device for branching signal light in optical communication or the like. US2018/192509A1 relates to a stranded transmission line and uses thereof. Rezem Maher et al. "Low-Cost Fabrication of All-Polymer Components for Integrated Photonics" describes a novel combination of simple fabrication techniques and cost-efficient polymer materials for the fabrication of planar polymer optical waveguides.

In view of the known art, it may be seen as a problem to provide a surface wave splitter, preferably a 1-to-8 type splitter, which can be easily integrated into existing network infrastructure.

### Summary of the invention

A splitter and a network infrastructure incorporating such splitter is provided, substantially as shown in and/or described in connection with at least one of the figures, and as set forth more completely in the claims.

These and other aspects, advantages and novel features of the present invention, as well as details of an illustrated embodiment thereof, will be more fully understood from the following description and drawings.

### Brief Description of the Drawings

Fig. 1 illustrates different exemplary bending angles of a wire for surface wave transmissions using a bending radius r;
The invention will be better understood with the aid of the description of embodiments given by way of example and illustrated by the figures, in which:
Figs. 2A and 2B illustrate the dimensions and relative orientations of the wires of an internal 1:2 splitter stage used for a splitter in accordance with examples of the invention;
Fig. 3 shows a schematic example of 1-to-8 surface wave splitter in accordance with an example of an aspect the invention
Fig. 4A-E show the exemplary schematic location of the wires connecting the I/O ports of a 1:8 splitter at 4 different vertical cross sections and in a collapsed view, respectively;
Figs. 5A and 5B illustrate the use of an exemplary splitter in accordance with the present invention within the general infrastructure of communication networks based on surface waves transmissions.

### Detailed Description

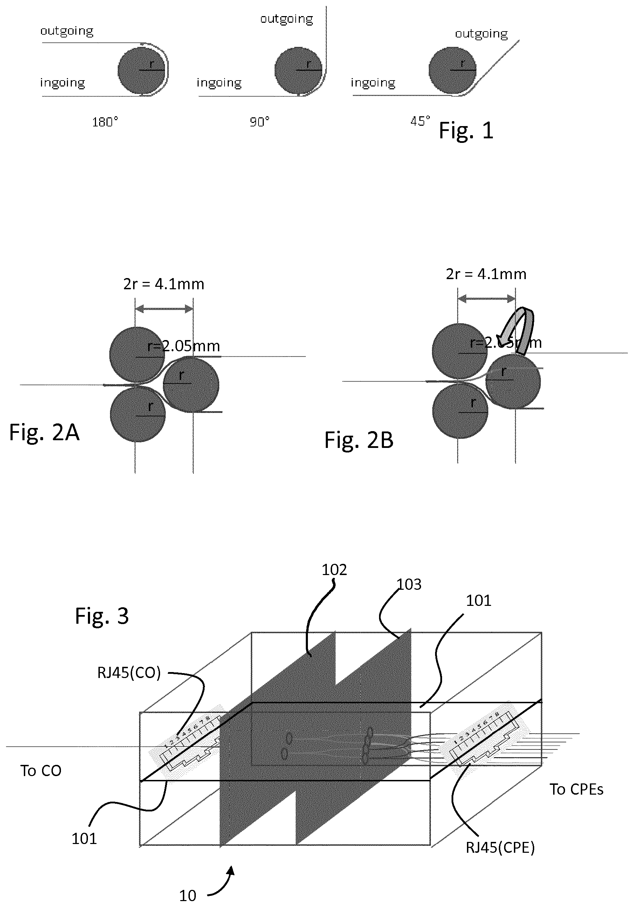

As the present description refers to bending angle and bending radius, both terms are illustrated in Figs 1 and 2, respectively.

As illustrated in Fig.1 the bending angle may be regarded as the angle between the (asymptotic or straight) parts of a wire at both sides (ingoing/outgoing) of a bend. Fig.1 illustrates bending angles of 180, 90 and 45 degrees, respectively. From measurements with surface waves it is found that the angle between ingoing and outgoing wire has an impact on the attenuation of the surface wave. Typically, the attenuation grows with increasing bending angle. While the attenuation is very high when the wire makes a 180° turn, the attenuation is reasonable for angles up to about 45°. While the three examples shown in Fig. 1 are depicted using the same bending radius r, it should be noted that the definition of the bending angle is not dependent on any given bending radius.

Referring again to Fig. 1 the bending radius r is defined as the radius of a circle, the circumference of which best matches the bending curve of the wire. A large bending radius cause a very smooth bend whilst for very sharp bends or kinks the radius may be close to zero. It has been found that larger bending radii correspond to decreased attenuation of the signal along the wire. However, a larger bending radius at a given bending angle extends the length of the bending section of the wire, hence a more compact device may require choosing the smallest feasible bending radius.

When considering the standard inter-pin distance of an RJ45 connector of 1.02 mm (as for example specified in the TIA/EIA-568 standard) it is preferable to choose a bending radius which corresponds to a multiple of this distance, in particular twice the distance corresponding to approximately 2.05mm. Fig. 2A illustrates the use of this bending radius in case of an initial +/-45 degrees bending angle to first separate two wires after a 1:2 split and each using a second opposite -/+45 degrees bending angle to redirect the orientation or direction of the two wires to the original orientation or direction of the wire before the split. The minimal distance of such an orientation preserving 1:2 split is 4.1 mm (=2*r), for a radius of 1.02 mm. In other words when using cascading orientation preserving 1:2 splits to generate a 1:n splitter using at each split the bending radius of 2.05 mm, then each stage of the cascade has a length of 4.1mm between the split points. In the case of Fig. 2B, one of the wires after the split is rotated out of the plane formed by the other two wires as indicated by the arrow.

Fig. 3 shows a schematic view of the internal wiring of a 1-to-8 surface wave splitter 10 in accordance with an example of the invention. It shows a single wire on the central office (CO) side of the splitter oriented to the central office (CO) and eight wires on the customer premises equipment (CPE) side of the splitter. The wires are shown entering and exiting, respectively, the splitter through interfaces or ports conforming in the physical dimensions with the RJ45 standard as commonly used in Ethernet applications. The ports are shown as RJ45(CO) and RJ45 (CPE), respectively.

Also shown is a (horizontal) virtual central plane 101 through the splitter defined as the plane which contains the contact points of the two ports RJ45(CO) and RJ45 (CPE). Perpendicular to the virtual central plane 101 is the first branch plane 102 and a second branch plane 103. The first and the second branch plane 102, 103 are also virtual and are used to show points indicating the locations where a wire intersects with the respective plane.

As shown, the single wire on the CO side of the splitter splits into two wires at a location within the splitter between the CO-side port RJ45(CO) and the first branch plane 102. Hence, two intersection points or dots are visible on the first branch plane 102. The single wire on the CO side is shown contacting the splitter at a single pin of CO-side port RJ45(CO). Each of the two wires intersecting the first branch plane 102 splits again twofold at a location between the first branch plane 102 and the second branch plane 103. The now four intersection points are shown on the second branch plane 103. Each of the four wires intersecting the second branch plane 103 splits again twofold at a location between the second branch plane 103 and the CPE-side port RJ45(CPE) of the splitter 10. The resulting eight wires are each in contact with a single pin of the CPE-side port RJ45(CPE). As stated above, the pins of the CPE-side port RJ45(CPE) may all be located on a straight line, which may be located in the virtual central plane 101 or parallel to it.

Applying the same kind of orientation preserving bending and 1:2 splitting of as illustrated in in Fig. 2 to the splitting between virtual planes 102 and 103, and to the splitting between virtual plane 103 and RJ45(CPE) illustrated in Fig. 3, results in a minimum length of 12.3mm for the whole splitter, corresponding to a minimal distance between the two ports RJ45(CO) and RJ45(CPE). It should be noted that a 1:2 split is preferred over higher numbers of splits such as 1:3 or higher splitting ratios. These higher ratios tend to introduce larger steps in the diameter at the transition point from the single wire to the multiple wires, which in turn may increase the attenuation of the surface wave.

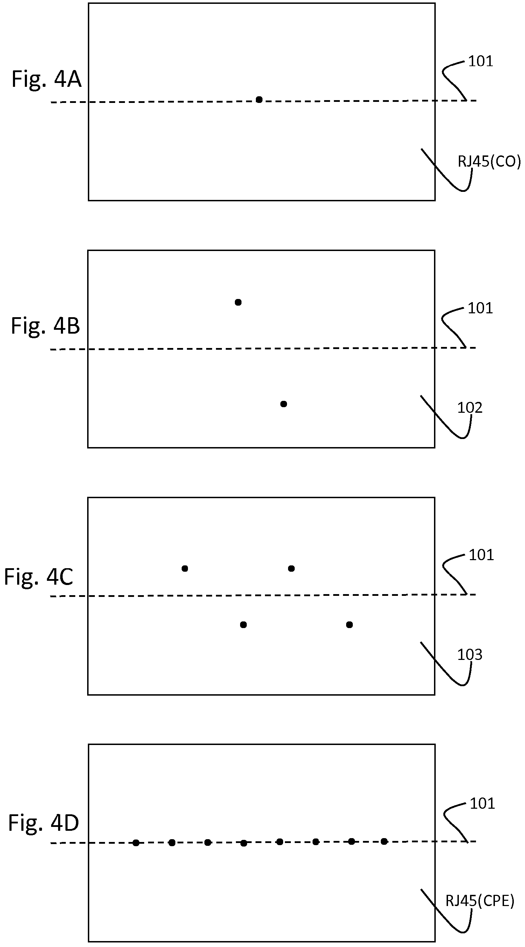

To maintain bending angles of 45° or less throughout within the splitter, the wires extend after a split into a different plane than before the split. To illustrate this out-of-plane layout of the wires, Fig. 4A shows the entry point of the single wire on the RJ45(CO) side at the central plane 101. Fig. 4B shows the points where the two wire intersect with the branch plane 102 after the first 1:2 split. Fig. 4C shows the points where the four wires intersect with the branch plane 103 after the second 1:2 splits and Fig. 4D show the eight points where the wires intersect with the RJ45(CPE) port side of the splitter after the third 1:2 splits. At this stage the wires are all at the correct pin locations in the virtual central plane 101.

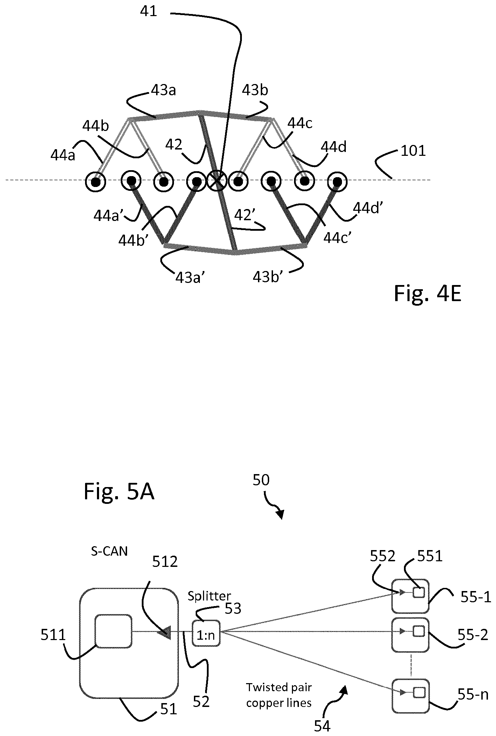

A collapsed perspective view of Figs 4A to 4D is shown in Fig 4E. In Fig. 4E, the virtual central plane 101 is taken as the plane of reference for the single wire 41 as marked by a crossed circle entering the splitter through a single pin on the RJ45(CO) port side. At the first internal 1:2 splitter stage the wire 41 splits into a wire 42 and a wire 42', where the unmarked numerals indicate a wire which is located above the virtual central plane 101 and marked numerals indicate a wire located below the virtual central plane 101. At the subsequent 1:2 internal splitter stage the wire 42 splits into a wire 43a and a wire 43b, both located above the plane 101. At the same internal 1:2 splitter stage the wire 42' splits into a wire 43a' and the wire 43b', both located below the plane 101. At the third internal 1:2 splitter stage the wire 43a splits into a wire 44a and a wire 44b. At the same third internal 1:2 splitter stage the wire 43b splits into a wire 44c and a wire 44d. At the same third internal 1:2 splitter stage the wire 43a' splits into a wire 44a' and a wire 44b'. At the same third internal 1:2 splitter stage the wire 43b' splits into a wire 44c' and a wire 44d'.

Again the wires 44a, 44b, 44c and 44d are shown located above the virtual central plane 101, while the wires 44a', 44b', 44c' and 44d' are shown located below the virtual central plane 101. However, each of the eight wires 44a -44d' aim for a pin location of the CPE-side port RJ45(CPE) as indicated by the eight circled dots in Fig. 4E (and as illustrated in Fig. 3D). The wires can be bent back into the same virtual central plane 101 as the single wire 41 applying bending angle of more than 45 degrees.

After the first internal 1:2 split, i.e. the wires 42 and 42' are rotated out of the virtual central plane 101 and thus make better use in the internal space or volume of the splitter. In particular, one of the wires (wire 42) is guided through the internal connector volume above virtual central plane 101 while the other wire at the internal 1:2 splitter stage (wire 42') is guided through the connector volume below horizontal middle plane or virtual central plane 101. Thus, by stretching the internal wiring and splitter stages into a truly three-dimensional space within the connector, a compact 1:8 splitter can be designed, which on the one hand remains pin compatible with conventional RJ45 connectors, while on the other hand limits the bending of all internal wires at a bending angle of around 45°.

Having an RJ-45 pin compatible splitter device facilitates the setup and maintenance of communication networks based on wire-bound surface wave communication by enabling network connections which go beyond simple point-to-point connections. Using the terminology of the old telephone networks, the advance provided by the splitters as described herein may be regarded as an analogy to the discarding of the old switchboards, where operators were responsible for setting up point-to-point connections between two parties of the telephone network.

Fig. 5A illustrates a schematic and very basic layout of components of a communication system 50 to transmit data from one copper access node to several homes over twisted pairs using surface waves communication. The system as shown comprises a surface-wave copper access node S-CAN 51, which may be located in a central office or at any other distribution point or network node. The S-CAN 51 is shown including a transceiver 511 and surface wave launcher 512 to couple the signals from the transceiver 511 with a copper wire 52. The copper wire 52 connects to the CO-side of a splitter 53 or a cascade of such splitters forming a 1:n splitter. The splitter 53 in turn is connected via multiple copper wires 54 on its CPE side to n CPEs (Customer Premise Equipments) 55-1,..,55-n each comprising their respective transceiver 551 and surface wave launcher 552.

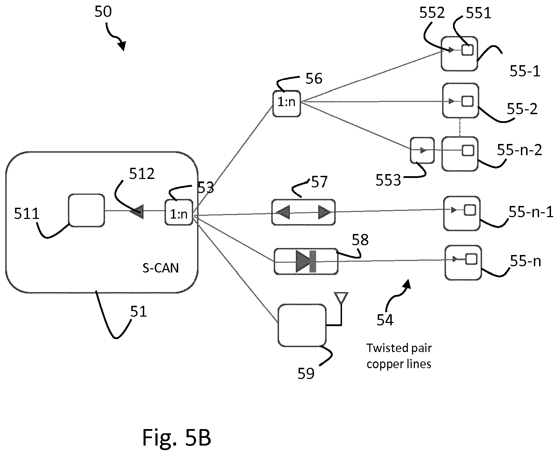

Fig. 5B illustrates a schematic and extended layout (when compared to Fig. 5A) of components of a communication system 50 to transmit data from one copper access node to several customer locations over twisted pairs using surface waves communication. The system as shown comprises as in Fig. 5A a surface-wave copper access node S-CAN 51. The S-CAN 51 is shown including a transceiver 511 and surface wave launcher 512 and integrates a splitter 53 or a cascade of such splitters forming a first 1:n splitter. The first surface wave splitter 53 in turn is connected on its CPE side to a further surface wave splitter 56 which connects to CPEs (Customer Premise Equipments) 55-1,..., 55-n-2 each with a transceiver 541 and a surface wave launcher 542 as already shown in Fig. 5A. In the connection to CPE 55-n-2 the surface wave launcher is shown integrated into a separate wall plug 553. This particular set-up may have advantages as beyond the launcher the signal continues on the CPE side as normal wire-bound EM signal, i.e. as a LAN-type signal, not sensitive to attenuation through bending.

The system 50 of Fig. 5B further includes example of a communication line including a surface wave repeater 57. The repeater is able to receive a signal with a launcher and launch it again. Such a unit is helpful in cases where the surface wave has less desired properties that yield higher attenuation than systems where the signal is transmitted in a cable. This are e.g. going around curves where the material on the inner side results in strong attenuation, window feed through, etc. The system 50 of Fig. 5B further includes example of a communication line including a surface wave amplifier 58. The amplifier may contain also an amplifier logic (for amplification in both up- and downlink) between the two launchers. The system 50 of Fig. 5B further includes example of a communication line including a surface wave wireless bridge 59, which can be applied to connect the surface wave system to a wireless system (not shown). The surface wave wireless bridge can be seen as a unit that translates the surface waves into a wireless signal that is sent over an antenna attached to the twisted pair cable. The surface wave wireless bridge may contain a filter (to select the desired frequency range) and a bi-directional amplifier (or two amplifiers for up- and downlink).

The system may make use of a multiuser approach to mitigate crosstalk and other signal interferences between the signals of different users (CPEs). This can be done either by assigning different frequencies, different time-slots or different codes to a specific user, or any other multiple access scheme, for example.

While various embodiments of the present invention have been described above, it should be understood that they have been presented by way of example only, and not as limitations. Likewise, the various diagrams may depict an example structure or other configurations for the invention, which is done to aid in understanding features and functionality that can be included in the invention. Further, it should be understood that the various features, aspects and functionality described in one or more of the individual embodiments are not limited in their applicability to the particular embodiment with which they are described, but instead can be applied, alone or in various combinations, to one or more of the other embodiments of the invention. In particular, the invention is not limited to a 1:8 splitter as any number n of a 1:n splitter can be achieved by using cascades of splitters or splitters with a larger dimensions. Also, it should be understood that the real layout and number of components of a surface wave network may vastly exceed in complexity and numbers the simplified examples used herein.

## Claims

1. A splitter having a housing for wire-bound surface wave communication with a plurality of I/O ports (RJ45(C0), RJ45(CPE)) for connecting external wires carrying surface waves and having internal wires (41, 42, 42', 44a-44d') connecting at least one of the plurality of I/O ports through the interior of said housing with at least two other of the plurality of I/O ports to enable the communication of surface wave signals through the splitter, wherein the connected I/O ports define an internal plane (101) within the interior of the housing of the splitter and wherein one or more of the internal wires (41, 42,42', 44a-44d') extend into the volume of the housing above and/or below the internal plane (101).

2. The splitter of claim 1, wherein after a first internal 1:2 splitter stage of an internal surface-wave carrying wire (41) connected to the at least one of the plurality of I/O ports, the resulting two wires (42,42') extend out of the internal plane (101), such that at a subsequent 1:2 split of the resulting two wires (42,42') the location of said subsequent split is also located outside of the internal plane (101), but wherein after final 1:2 internal splitter stage the wires (44a-44d') resulting from the final splitter stage connect to the at least two other of the plurality of I/O ports and thus terminate in the internal plane (101).

3. The splitter of claim 1 or 2, wherein after the first internal 1 :2 splitter stage of a wire, a first of the two wires (42,42') extend into the volume of the housing above the internal plane (101) and a second of the two wires (42,42') extend into the volume of the housing below the internal plane (101).

4. The splitter of any of the preceding claims, wherein the bending angle of each wire within the housing of the splitter is at any bend of such wire in the range of 0 to 50 degrees, preferably 45 degrees.

5. The splitter of any of the preceding claims wherein the bending or curvature radius of each wire within the housing the splitter is at any bend of such wire in the range of infinity to 3 mm, preferably 2.05 mm.

6. The splitter of any of the preceding claims wherein the ports (RJ45(C0), RJ45(CPE)) of the splitter are pin-compatible with an RJ45 port.

7. A communication network based on the exchange of wire-bound surface waves between a central office, CO, location and a consumer premises equipment, CPE**,** location, comprising one or more splitters in accordance with claim 1 within the network between the central office, CO, location and the consumer premises equipment, CPE, location.

8. A communication network in accordance with claim 7, wherein the splitter de-/multiplex surface wave signals in accordance with a CPE-specific signal multiplexing or encoding scheme.

## Patentansprüche

1. Teiler, aufweisend ein Gehäuse, zur drahtgebundenen Oberflächenwellenkommunikation mit einer Vielzahl von E/A-Ports (RJ45(C0), RJ45(CPE)) zum Verbinden von externen Drähten, die Oberflächenwellen tragen, und aufweisend interne Drähte (41, 42, 42', 44a-44d'), die mindestens einen der Vielzahl von E/A-Ports durch den Innenraum des besagten Gehäuses mit mindestens zwei anderen der Vielzahl von E/A-Ports verbinden, um die Kommunikation von Oberflächenwellensignalen durch den Teiler zu ermöglichen, wobei die verbundenen E/A-Ports eine interne Ebene (101) innerhalb des Innenraums des Gehäuses des Teilers definieren und wobei sich einer oder mehrere der internen Drähte (41, 42, 42', 44a-44d') in das Volumen des Gehäuses über und/oder unter der internen Ebene (101) erstrecken.

2. Teiler nach Anspruch 1, wobei nach einer ersten internen 1:2-Teiler-Stufe eines internen Oberflächenwellen tragenden Drahts (41), der mit dem mindestens einen der Vielzahl von E/A-Ports verbunden ist, sich die resultierenden zwei Drähte (42, 42') aus der internen Ebene (101) heraus erstrecken, sodass bei einer anschließenden 1:2-Teilung der resultierenden zwei Drähte (42, 42') sich die Stelle der besagten anschließenden Teilung ebenfalls außerhalb der internen Ebene (101) befindet, wobei jedoch nach einer letzten internen 1:2-Teiler-Stufe sich die Drähte (44a-44d'), die aus der letzten Teiler-Stufe resultieren, mit den mindestens zwei anderen der Vielzahl von E/A-Ports verbinden und somit die interne Ebene (101) abschließen.

3. Teiler nach Anspruch 1 oder 2, wobei nach der ersten internen 1:2-Teiler-Stufe eines Drahts sich ein erster der zwei Drähte (42, 42') in das Volumen des Gehäuses über der internen Ebene (101) erstreckt und sich ein zweiter der zwei Drähte (42, 42') in das Volumen des Gehäuses unter der internen Ebene (101) erstreckt.

4. Teiler nach einem der vorhergehenden Ansprüche, wobei der Biegewinkel jedes Drahts innerhalb des Gehäuses des Teilers bei einer beliebigen Biegung eines derartigen Drahts im Bereich von 0 bis 50 Grad, vorzugsweise 45 Grad liegt.

5. Teiler nach einem der vorhergehenden Ansprüche, wobei der Biege- oder Krümmungsradius jedes Drahts innerhalbdes Gehäuses des Teilers bei einer beliebigen Biegung eines derartigen Drahts im Bereich von Unendlichkeit bis 3 mm, vorzugsweise 2,05 mm liegt.

6. Teiler nach einem der vorhergehenden Ansprüche, wobei die Ports (RJ45(C0), RJ45(CPE)) des Teilers mit einem RJ45-Port pinkompatibel sind.

7. Kommunikationsnetzwerk auf der Basis eines Austauschs von drahtgebundenen Oberflächenwellen zwischen einer Hauptniederlassungsstelle, CO-Stelle, und einer Teilnehmergerätestelle, CPE-Stelle, umfassend einen oder mehrere Teiler nach Anspruch 1 innerhalb des Netzwerks zwischen der Hauptniederlassungsstelle, CO-Stelle, und der Teilnehmergerätestelle, CPE-Stelle.

8. Kommunikationsnetzwerk nach Anspruch 7, wobei der Teiler Oberflächenwellensignale gemäß einem CPE-spezifischen Signalmultiplex- oder -codierschema demultiplext/multiplext.

## Revendications

1. Séparateur ayant un boîtier pour la communication par ondes de surface filaires avec une pluralité de ports E/S (RJ45(C0), RJ45(CPE)) pour connecter des fils externes transportant des ondes de surface et ayant des fils internes (41, 42, 42', 44a-44d') reliant au moins l'un de la pluralité de ports E/S à travers l'intérieur dudit boîtier à au moins deux autres de la pluralité de ports E/S pour permettre la communication de signaux d'ondes de surface à travers le séparateur, dans lequel les ports E/S connectés définissent un plan interne (101) à l'intérieur du boîtier du séparateur et dans lequel un ou plusieurs des fils internes (41, 42, 42', 44a-44d') s'étendent dans le volume du boîtier au-dessus et/ou au-dessous du plan interne (101).

2. Séparateur selon la revendication 1, dans lequel après un premier étage de séparation interne 1:2 d'un fil porteur d'ondes de surface interne (41) connecté à l'au moins un de la pluralité de ports E/S, les deux fils résultants (42, 42') s'étendent hors du plan interne (101), de sorte que lors d'une séparation 1:2 subséquente des deux fils résultants (42, 42'), l'emplacement de ladite séparation subséquente est également situé hors du plan interne (101), mais dans lequel après un dernier étage de séparation interne 1:2, les fils (44a-44d') résultant du dernier étage de séparation se connectent aux au moins deux autres de la pluralité ports E/S et se terminent ainsi dans le plan interne (101).

3. Séparateur selon la revendication 1 ou 2, dans lequel après le premier étage de séparation interne 1:2 d'un fil, un premier des deux fils (42,42') s'étend dans le volume du boîtier au-dessus du plan interne (101) et un second des deux fils (42,42') s'étend dans le volume du boîtier au-dessous du plan interne (101).

4. Séparateur selon l'une quelconque des revendications précédentes, dans lequel l'angle de flexion de chaque fil à l'intérieur du boîtier du séparateur est, à chaque flexion du fil, dans la plage de 0 à 50 degrés, de préférence 45 degrés.

5. Séparateur selon l'une quelconque des revendications précédentes, dans lequel le rayon de flexion ou de courbure de chaque fil à l'intérieur du boîtier du séparateur est, à chaque flexion de ce fil, dans la plage située entre l'infini et 3 mm, de préférence 2,05 mm.

6. Séparateur selon l'une quelconque des revendications précédentes, dans lequel les ports (RJ45(C0), RJ45(CPE)) du séparateur sont compatibles au niveau des broches avec un port RJ45.

7. Réseau de communication basé sur l'échange d'ondes de surface filaires entre un emplacement de centre de commutation, CO, et un emplacement d'équipement des locaux d'abonné, CPE, comprenant un ou plusieurs séparateurs selon la revendication 1 dans le réseau entre l'emplacement de centre de commutation, CO, et l'emplacement d'équipement des locaux d'abonné, CPE.

8. Réseau de communication selon la revendication 7, dans lequel le séparateur dé/multiplexe des signaux d'ondes de surface conformément à un schéma de multiplexage ou d'encodage des signaux spécifique au CPE.
